# EUROPÄISCHE PATENTANMELDUNG

(11) **EP 2 703 759 A1**
(43) Veröffentlichungstag der Anmeldung: **05.03.2014**
(21) Anmeldenummer: 12183023.6
(22) Anmeldetag: 04.09.2012
(51) Int. Cl.: F27B 9/20, F27B 9/24, F27B 17/00, F27D 3/00, F27D 3/02, F27D 3/12, F27D 5/00

(54) **Tragmittel für Öfen**

(71) Anmelder: Schwartz, Eva, Friedhofsweg 44 52152 Simmerath (DE)
(72) Erfinder: Schwartz, Rolf-Josef, 52152 Simmerath (DE)
(74) Vertreter: Jostarndt, Hans-Dieter

(57) **Zusammenfassung**

Die Erfindung betrifft eine Trennschicht auf einem Tragmittel für Öfen, in denen metallische Werkstücke wärmebehandelt werden. Bei der Wärmebehandlung AlSi-beschichteter Bleche ergibt sich das Problem, dass die Werkstoffe der Tragmittel der Öfen mit dem Aluminium der Beschichtung der Werkstücke thermo-chemisch reagieren und daher die Standzeit der Tragmittel gering ist. Aufgabe der Erfindung ist es, ein Tragmittel für einen Ofen für die Wärmebehandlung AlSi-beschichteter Metallteile anzugeben, das eine deutlich längere Standzeit als bekannte Tragmittel bei einem deutlich geringerem Preis als Tragmittel aus nichtoxidischer aluphober Keramik aufweist. Zur Lösung des Problems schlägt die Erfindung vor, dass das Tragmittel eine Oberfläche aus einem thermostabilen Metalloxid oder Metallnitrid, wie beispielsweise Aluminiumoxid, Boroxid oder Bornitrid aufweist.

## Beschreibung

Die Erfindung betrifft Tragmittel für Öfen, in denen metallische Werkstücke wärmebehandelt werden.

Im Bereich der Fahrzeugindustrie ist es das Bestreben, Fahrzeuge mit einem möglichst geringen Kraftstoffverbrauch zu entwickeln. Ein übliches Mittel zur Reduzierung des Kraftstoffverbrauchs liegt dabei beispielsweise in der Reduzierung des Fahrzeuggewichts. Um jedoch steigenden Sicherheitsanforderungen gerecht zu werden, müssen die verwendeten Karosseriebaustähle bei geringerem Gewicht eine höhere Festigkeit aufweisen. Dies wird üblicherweise durch den Prozess des so genannten Presshärtens erreicht. Dabei wird ein Blechteil auf etwa 800 - 1000°C erwärmt und anschließend in einem gekühlten Werkzeug verformt und abgeschreckt. Die Festigkeit des Bauteils nimmt dadurch bis auf etwa das Dreifache zu.

Aus Gründen der Prozesssicherheit und der Wirtschaftlichkeit haben sich Durchlauf öfen für die Wärmebehandlung durchgesetzt. Dabei werden die zu behandelnden Metallteile kontinuierlich durch den Ofen hindurch gefördert. Alternativ können auch Kammeröfen eingesetzt werden, in denen die Metallteile chargenweise in eine Kammer verbracht, dort erwärmt und anschließend wieder entnommen werden.

Beim Presshärten unterscheidet man grundsätzlich das direkte und das indirekte Verfahren.

Beim indirekten Verfahren wird eine Platine aus einem Coil heraus gestanzt, kalt verformt und das so vorgeformte Bauteil der Wärmebehandlung zugeführt. Nach der Wärmebehandlung wird das heiße Bauteil der Presse zugeführt in einem indirekt gekühlten Werkzeug pressgehärtet. Anschließend werden die Bauteile noch einmal getrimmt und zur Entfernung eventuell vorhandener Verzunderungen gesandstrahlt. Beim direkten Verfahren wird ebenfalls eine Platine aus einem Coil heraus gestanzt, allerdings findet hier keine Vorverformung statt, sondern die Platine wird direkt dem Ofen zugeführt. Nach der Wärmebehandlung wird die heiße Platine der Presse zugeführt und in einem indirekt wassergehkühlten Werkzeug verformt und gleichzeitig pressgehärtet. Anschließend werden die geformten Bauteile noch einmal erforderlichenfalls getrimmt.

Für beide Verfahren haben sich aus Gründen der Prozesssicherheit und der Wirtschaftlichkeit sogenannte Rollenherdöfen durchgesetzt. Als eine alternative Ofenbauform kann beispielsweise der Hubbalkenofen genannt werden, bei dem die Metallteile mittels Hubbalken durch den Ofen transportiert werden. Auch Mehrlagenkammeröfen finden zunehmend Bedeutung.

Da die Bauteile beim indirekten Prozess vorgeformt sind, müssen sie auf Grund ihrer komplexen Form auf Warenträgern durch den Ofen gefördert bzw. in die Ofenkammer verbracht werden. Weiterhin sind Durchlauföfen für dieses Verfahren üblicherweise mit Ein- und Auslaufschleusen ausgerüstet, da beim indirekten Verfahren unbeschichtete Bauteile wärmebehandelt werden müssen. Um eine Verzunderung der Bauteiloberfläche zu vermeiden, muss ein solcher Ofen mit Schutzgas betrieben werden. Diese Ein- und Auslaufschleusen dienen zur Vermeidung des Lufteintrittes in den Ofen. Kammeröfen für dieses Verfahren können ebenfalls mit einer Schleuse ausgerüstet sein. Es ist bei dieser Ofenbauform aber auch möglich, die Atmosphäre in der Ofenkammer für jeden Zyklus auszutauschen. Durchlauföfen für dieses Verfahren müssen mit einem Warenträger-Rückfördersystem ausgestattet werden, um den Kreislauf der Warenträger zu gewährleisten. In diesen Öfen werden keramische Förderrollen eingesetzt. Nur die Ein- und Auslauftische sowie der Warenträgerrückförderer sind mit metallischen Förderrollen ausgestattet.

Bei Durchlauföfen für das direkte Verfahren entfällt der Einsatz von Warenträgern. Daher ist die Konstruktion etwas einfacher als die der Durchlauföfen für den indirekten Prozess. Statt mittels Warenträger befördert zu werden, werden die Platinen beim direkten Verfahren unmittelbar auf keramische Förderrollen aufgelegt und durch den Ofen gefördert. Diese Öfen können mit und ohne Schutzgas betrieben werden. Auch hier ist das Ofengehäuse serienmäßig gasdicht geschweißt. Ein weiterer Vorteil dieser Bauart ist in dem positiven Effekt der Förderrolle auf die gleichmäßige Erwärmung der zu behandelnden Metallteile zu sehen: Die durch die Ofenheizung mit aufgewärmten ortsfesten Rollen erwärmen über Strahlung und Wärmeleitung das auf ihnen transportierte und daher mit ihnen in Kontakt stehende Metallteil zusätzlich auf. Darüber hinaus sind diese Öfen mit einem deutlich niedrigen Energieeinsatz zu betreiben, da es keine Warenträger gibt, die auf dem Rücktransport nach dem Ofendurchlauf auskühlen können und daher im Ofen bei einem erneuten Durchlauf wieder mit aufgeheizt werden müssen. Das direkte Verfahren wird daher mit der Verwendung von Durchlauföfen bevorzugt verwendet.

Die im Fahrzeugbau verwendeten Bleche sollen möglichst nicht rosten. Auch soll eine Verzunderung während des Bearbeitungsprozesses vermieden werden, da solche Verzunderungen zur Weiterverarbeitung, spätestens vor dem Schweiß- oder Lackierprozess, aufwändig und kostspielig entfernt werden müssen. Da unbehandelte Stahlbleche aber bei den beim Presshärten erforderlichen hohen Temperaturen unter Anwesenheit von Sauerstoff unweigerlich verzundern würden, ist es üblich, beschichtete Bleche zu verwenden und / oder den Wärmebehandlungsprozess bei Abwesenheit von Sauerstoff durchzuführen. Dazu ist es bekannt, die Wärmebehandlung in dem Ofen unter Vakuum oder einer sauerstofffreien Schutzgasatmosphäre durchzuführen.

Üblicherweise werden für pressgehärtete Bauteile für die Automobilindustrie Aluminium-Silizium-(AlSi-)beschichtete Bleche verwendet. Die Beschichtung verhindert das Rosten der Bleche, ebenso wie ein Verzundern der heißen Bleche auf dem Transfer von dem Ofen zur Presse. Das AlSi des Überzugs diffundiert einerseits in die Stahloberfläche und andererseits bildet es eine dichte AlSi-Oxidschicht, welche den Grundwerkstoff gegen weitere Verzunderung schützt.

Der gravierendste Nachteil des direkten Presshärtens in den oben beschriebenen Rollenherdöfen liegt darin begründet, dass AlSi-beschichtete Platinen direkt auf die keramischen Förderrollen aufgelegt werden, und es dadurch zu starken thermo-chemischen Reaktionen zwischen der AlSi-Beschichtung und der keramischen Rollen kommt. Dadurch ist es notwendig, die Rollen relativ oft auszutauschen, was die Verfügbarkeit der Anlage beeinflussen kann und einen hohen Aufwand bedeutet. Ein ähnlicher Effekt ergibt sich bei allen Fördermitteln wie Warenträgern, Hubbalken, usw., da auch sie üblicherweise aus Keramik oder oxidiertem Metall bestehen, im Prozess mit aufgeheizt werden und in direktem Kontakt mit der AlSi-Beschichtung der zu behandelnden Metallteile stehen. Aber auch bei allen anderen aus Keramik bestehenden Tragmitteln, die im Prozess mit aufgeheizt werden und in direktem Kontakt mit der AlSi-Beschichtung der zu behandelnden Metallteile stehen, kann es zu den beschriebenen thermo-chemischen Reaktionen kommen. Ein weiterer Nachteil des beschriebenen Verfahrens ist in der großen Temperaturdifferenz der aufgeheizten Keramik der Oberflächen der Tragmittel wie Fördermittel oder anderer Flächen, wie beispielsweise Auflageflächen in einem Kammerofen, zu sehen, wenn sie mit den relativ kalten zu behandelnden Platinen in Kontakt kommen. Die Platinen weisen beispielsweise zu Beginn der Wärmebehandlung Raumtemperatur auf, während die Oberflächen der Tragmittel Temperaturen nahe der Prozesstemperatur von beispielsweise 1.000°C aufweisen. Die heißen keramischen Oberflächen können bei Kontakt mit den kalten Platinen einen Temperaturschock erleiden, der die Keramik schädigen kann.

Bei den derzeit in Rollenherdöfen im Einsatz befindlichen Rollen handelt es sich um Hohlrollen aus dem Werkstoff Sinter-Mullit (3Al₂0₃.2Si0₂) und Vollrollen aus Quarzgut. Die Quarzgut-Rollen bestehen zu über 99 % aus Si0₂ und haben eine Anwendungsgrenze von ca. 1100 °C mit dem Nachteil, dass sie sich bei ca. 700 bis 800°C durch das Eigengewicht verbiegen. Rollen aus Sinter-Mullit können belastet bis 1350 °C eingesetzt werden, ohne dass es zu signifikanten Verbiegungen kommt. Der große Vorteil beider Werkstoffe ist die hohe Temperaturwechselbeständigkeit. Allerdings haben beide Werkstoffe eine sehr hohe Affinität, mit geschmolzenem Aluminium zu unterschiedlichen Aluminium-Silikat oder gar Silizid-Verbindungen zu reagieren. Da die AlSi-Beschichtung während der Wärmebehandlung aufschmilzt, kann diese Schmelze ungehindert mit dem Rollenwerkstoff reagieren. Dabei dringt die Schmelze in die porösen Rollen ein, verfestigt sich und führt zu einem deutlichen partiellen Dichteunterschied in der Rolle, was zum Versagen in Form von Bruch der Rolle führt.

Zur Vermeidung dieses Problems wurden alternative Rollenwerkstoffe vorgeschlagen. In Pfeifer, Nacke, Beneke: Praxishandbuch Thermoprozesstechnik, Band II, Vulkan-Verlag 2011 (ISBN 978-3-8027-2955-3) werden Rollen aus einer nichtoxidischen aluphoben Keramik offenbart. Zwar wurden auch hier nach dem Kontakt mit AlSi-beschichteten Platinen starke Aufwachsungen beobachtet, dabei traten aber keine signifikanten Reaktionen mit der Rollenmatrix auf. Diese Aufwachsungen können mechanisch entfernt werden und die Rolle auf diese Weise für den weiteren Gebrauch regeneriert werden. Weiterhin zeichnet sich dieser Werkstoff durch eine sehr hohe Temperaturwechselbeständigkeit und durch eine gute Hochtemperaturfestigkeit aus.

Der Nachteil dieses Rollenwerkstoffs ist der sehr hohe Preis. Eine solche Rolle kann 15 bis 20 mal teurer als eine Mullit-Rolle mit denselben Abmessungen sein. Weiterhin ist die hohe Wärmeleitfähigkeit ein Nachteil, da sie zu einer hohe Wärmebelastung der Rollenlagerung führt. Darüberhinaus lassen sich diese Rollen nicht in der für diesen Prozess erforderlichen Geradheit herstellen. Eine mechanische Nachbearbeitung ist aufgrund ihrer großen Härte nicht wirtschaftlich möglich.

Aufgabe der Erfindung ist es daher, ein Tagmittel für einen Ofen für die Wärmebehandlung AlSi-beschichteter Metallteile anzugeben, das eine deutlich längere Standzeit als bekannte Tragmittel bei einem deutlich geringeren Preis als Tragmittel aus nichtoxidischer aluphober Keramik aufweist.

Erfindungsgemäß wird diese Aufgabe durch ein Tragmittel mit den Merkmalen des unabhängigen Anspruches 1 gelöst. Vorteilhafte Weiterbildungen des Tragmittels ergeben sich aus den Unteransprüchen 2 - 14.

Eine weitere Aufgabe der Erfindung besteht darin, einen Ofen für die Wärmebehandlung AlSi-beschichteter Metallteile anzugeben, wobei der Ofen signifikant verlängerte Wartungsintervalle gegenüber den Öfen aus dem Stand der Technik bei nicht signifikant erhöhten Kosten aufweisen soll.

Diese Aufgabe wird durch den Gegenstand des Anspruchs 15 gelöst.

Das erfindungsgemäße Tragmittel zeichnet sich dadurch aus, dass es eine Oberfläche aus einer thermo-chemisch stabilen Trennschicht aufweist, die eine Bildungsenergie von höchsten 950kJ/mol bei 1.000°C benötigt. Die Bildungsenthalpiekurven solcher Werkstoffe liegen im Ellingham-Richardson-Diagramm der freien Bildungsenthalpien unterhalb oder mindestens auf der von Aluminiumoxid Al₂O₃.

Die bei der Wärmebehandlung AlSi-beschichteter Bleche üblicherweise festzustellenden Aufwachsungen auf den Tragmitteln, die in unmittelbaren Kontakt mit den heißen Blechen kommen, sind darauf zurückzuführen, dass sich das Aluminium der AlSi-Beschichtung ab ca. 650°C mit Sauerstoff zu Al₂O₃ verbindet. Der Sauerstoff wird aus der Oxide enthaltenden Trägerkeramik herausgelöst, insbesondere wenn kein freier Sauerstoff beispielsweise in der Atmosphäre vorhanden ist. Die Bleche bilden daher sofort eine Hülle aus Al₂O₃. Bei mechanischer Belastung der Bleche, wie sie bei dem Transport der Bleche im Ofen unvermeidbar ist, platzt diese Hülle immer wieder auf, wodurch weiterer Sauerstoff aus der Trägerkeramik herausgelöst wird und das Tragmittel auf diese Weise immer weiter geschädigt wird. Durch die Wahl eines Tragmittelwerkstoffs, der an seiner Oberfläche eine thermo-chemisch stabile Trennschicht aufweist, die eine Bildungsenergie von höchsten 950kJ/mol bei 1.000°C benötigt, wird dieser Prozess verhindert. Flüssiges Aluminium ist nicht in der Lage, Metalloxide mit Bildungsenthalpiekurven, die im Ellingham-Richardson-Diagramm oberhalb der Kurve für Aluminiumoxid liegen, aufzulösen. Eine solche thermo-chemisch stabile Trennschichte enthält beispielsweise Aluminiumoxid, Boroxid oder Bornitrid.

Tragmittel, die komplett aus beispielsweise Aluminiumoxid bestehen, sind zwar technologisch geeignet, scheiden aber aus Kostengründen sowie wegen ihrer geringen Temperatur-Wechselbeständigkeit für diese industrielle Anwendung aus. Daher werden Tragmittelwerkstoffe bevorzugt, die aus einer Metalllegierung oder einer keramischen Beschichtung, die auf der oben beschriebenen Gesetzmäßigkeit beruht, bestehen. Eine solche Beschichtung enthält beispielsweise einen erhöhten Aluminium- bzw. Boranteil. Geeignete Metalllegierungen sind beispielsweise pulvermetallurgische Stähle APM oder Legierungen wie beispielsweise die Stähle mit den Werkstoffnummern 1.4725, 1.4765 oder 1.4767 nach DIN 17470, die einen Aluminiumanteil von 3,5 bis 6,0 Massen% aufweisen. Diese Werkstoffe bilden an ihrer Oberfläche eine stabile Aluminiumoxidschicht, wobei ihr Kern aus dem stabilen metallischen Grundwerkstoff besteht. Die Aluminiumoxidschicht kann aber auch durch die beschriebene Beschichtung vor dem Einsatz des Tragmittels aufgebracht werden. Alternativ können auch keramische Werkstoffe eingesetzt werden, die mit Al₂O₃ oder Boroxid oder Bornitrid beschichtet wurden. Eine solche Beschichtung kann beispielsweise im Flammspritzverfahren aufgebracht werden.

Als ebenfalls vorteilhaft hat sich die Verwendung eines chemischen Sol-Gel-Verfahrens herausgestellt. Dabei werden aus kolloidalen Dispersionen, den sogenannten Solen, nichtmetallischer anorganischer Materialien hergestellt. Aus den kolloidalen Dispersionen entstehen in Lösung in ersten Grundreaktionen feinste Teilchen. Durch eine spezielle Weiterverarbeitung der Sole lassen sich Schichten erzeugen. Der Prozess ist dem Fachmann bekannt und wird daher hier nicht weiter beschrieben.

Eine Schichtdicke von wenigen µm hat sich dabei als ausreichend erwiesen, sofern die Schicht dicht geschlossen ist. Bevorzugt beträgt die Schichtdicke ca. 5 µm.

Eine solche Oberfläche mindert auch den Temperaturschock, den die auf eine Temperatur nahe der oder auf Prozesstemperatur aufgeheizte Keramik erleidet, wenn sie mit den relativ kalten, beispielsweise Raumtemperatur aufweisenden, Wärme zu behandelnden Blechen in Kontakt kommt.

Es hat sich weiterhin als vorteilhaft erwiesen, wenn die thermo-chemisch stabile Trennschicht der Oberfläche des Tragmittels dicht geschlossen ist.

Es hat sich als besonders vorteilhaft erwiesen, wenn die Oberfläche des Tragmittels aus einer Schicht besteht, die 6 Massen% Aluminium aufweist.

Das Tragmittel kann dabei eine Rolle eines Rollenherdofens, ein Warenträger beispielsweise eines Kammerofens, ein Hubbalken eines Hubbalkenofens oder auch die Oberfläche des Bodens einer Kammer eines Kammerofens sein.

Der erfindungsgemäße Ofen zeichnet sich dadurch aus, dass er ein erfindungsgemäßes Tragmittel aufweist.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: Rollenherdofen
- Fig. 2: Werkstücke beim Transport durch einen Rollenherdofen
- Fig. 3: Querschnitt durch eine erfindungsgemäße Rolle eines Rollenherdofens
- Fig. 4: ein Ellingham-Richardson-Diagramm

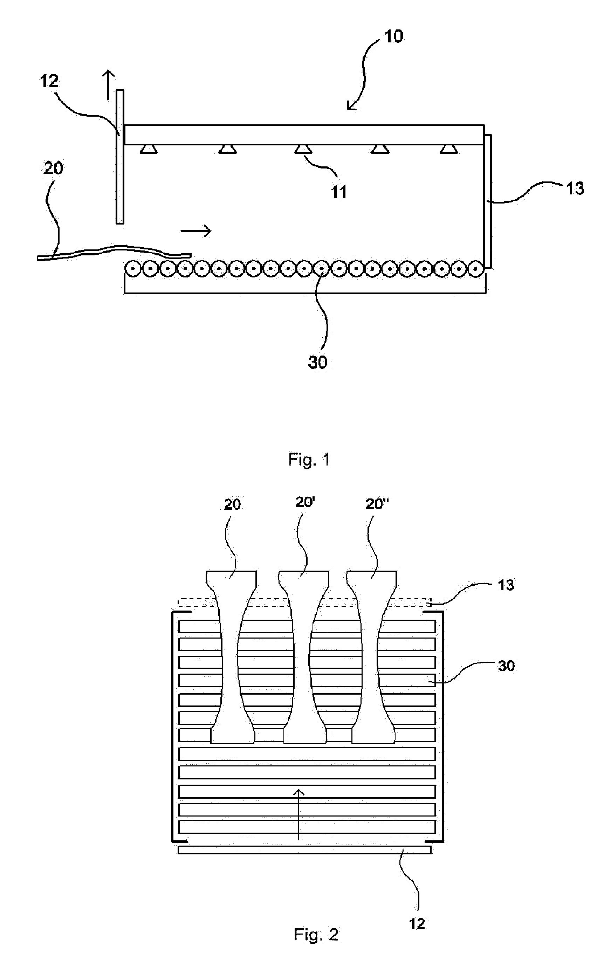

Fig. 1 ist die schematische Darstellung eines Rollenherdofens 10. Ein Werkstück 20 wird durch einen eingangsseitigen Trennschieber 12, der das Ofeninnere gegen die Außenatmosphäre abtrennt, und der geöffnet und geschlossen werden kann, auf Tragmitteln in Form von Rollen 30 in die Ofenkammer gefördert. Dort erhält das Werkstück 20 seine Wärmebehandlung, indem es von Heizmitteln 11 erwärmt wird. Dabei wird es weiter auf den Rollen 30 durch die Ofenkammer gefördert. Wenn das Werkstück 20 komplett in die Ofenkammer eingefördert ist, wird der eingangsseitige Trennschieber 12 geschlossen. Um das Werkstück 20 aus der Ofenkammer wieder heraus fördern zu können, befindet sich gegenüber der eingangsseitigen Abdeckung 12 eine ausgangsseitige Abdeckung 13, die ebenfalls als Trennschieber ausgeführt ist und öffnen- und schließbar ist. Wenn das Werkstück aus der Ofenkammer heraus gefördert werden soll, öffnet dieser ausgangsseitige Trennschieber 13, und das Werkstück 20 wird mittels der Rollen 30 aus dem Ofen 10 heraus gefördert.

In Fig. 2 ist in einer Draufsicht zu sehen, wie drei Werkstücke 20, 20', 20" parallel durch den Ofen 10 gefördert werden. Die drei Werkstücke 20, 20', 20" liegen auf Tragmitteln in Form von Rollen 30 auf, die durch ihre Drehung die Werkstücke 20, 20', 20" parallel durch die Ofenkammer fördern. Die Eingangs- und Ausgangsseiten des Ofens können mit Trennschiebern 12, 13 geöffnet werden, um die Werkstücke 20, 20', 20" passieren zu lassen. Nach der Passage der Werkstücke 20, 20', 20" werden die Trennschieber 12, 13 wieder geschlossen.

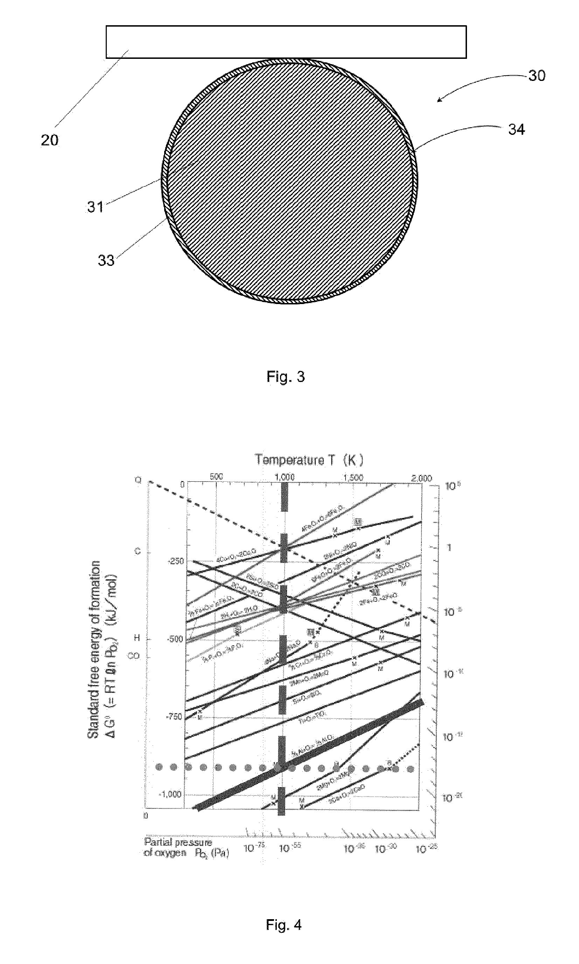

Fig. 3 ist ein Querschnitt durch ein erfindungsgemäßes Tragmittel in Form einer Rolle 30 eines Rollenherdofens 10. Ein Werkstück 20 aus einem AlSi-beschichteten Blech wird über die Rolle 30 transportiert, indem das Werkstück 20 unmittelbar auf der Rolle 30 aufliegt. Die Rolle 30 besteht aus einer Metalllegierung, die einen erhöhten Aluminiumanteil enthält. Solche Metalllegierungen sind beispielsweise pulvermetallurgische Stähle APM oder Heizleiterlegierungen wie beispielsweise die Stähle mit den Werkstoffnummern 1.4725, 1.4765 oder 1.4767 nach DIN 17470, die einen Aluminiumanteil von 3,5 bis 6,0 Massen% aufweisen. An der Oberfläche 34 bildet die Rolle 30 eine stabile Aluminiumoxidschicht 33. Der Kern 31 der Rolle 30 besteht dabei weiterhin aus der einen erhöhten Aluminiumanteil aufweisenden Metalllegierung. Die Dicke der Schicht 33 beträgt 5 µm (in der Figur nicht maßstäblich dargestellt) und weist 6 Massen% Aluminium auf.

Fig. 4 zeigt das Ellingham-Richardson-Diagramm der freien Bildungsenthalpien. Die Oberfläche 34 des Tragmittels 30 weist erfindungsgemäß eine thermo-chemisch stabile Trennschicht 33 auf, die eine Bildungsenergie von höchsten 950kJ/mol bei 1.000°C benötigt. Die Bildungsenthalpiekurven solcher Werkstoffe liegen im Ellingham-Richardson-Diagramm der freien Bildungsenthalpien unterhalb oder mindestens auf der Bildungsenthalpiekurve von Aluminiumoxid Al₂O₃. Die Bildungsenthalpiekurve von Aluminiumoxid Al₂O₃ ist in Fig. 4 dick ausgezogen. Die Bildungsenergie von 950 kJ7mol ist dick gepunktet in das Diagramm eingezeichnet, während die Temperatur von 1.000°C als dicke gestrichelte Linie im Diagramm erkennbar ist.

Die bei der Wärmebehandlung AlSi-beschichteter Bleche üblicherweise festzustellenden Aufwachsungen auf den Tragmitteln, die in unmittelbaren Kontakt mit den heißen Blechen kommen, sind darauf zurückzuführen, dass sich das Aluminium der AlSi-Beschichtung ab ca. 650°C mit Sauerstoff zu Al₂O₃ verbindet. Der Sauerstoff wird aus der Oxide enthaltenden Trägerkeramik herausgelöst, insbesondere wenn kein freier Sauerstoff beispielsweise in der Atmosphäre vorhanden ist. Dies ist bei den beschriebenen Anwendungen oft der Fall, da der Wärembehandlungsprozess üblicherweise unter sauerstofffreiem Schutzgas durchgeführt wird. Die Bleche bilden daher sofort eine Hülle aus Al₂O₃. Bei mechanischer Belastung der Bleche, wie sie bei dem Transport der Bleche im Ofen unvermeidbar ist, platzt diese Hülle immer wieder auf, wodurch weiterer Sauerstoff aus der Trägerkeramik herausgelöst wird und das Tragmittel auf diese Weise immer weiter geschädigt wird. Durch die Wahl eines Tragmittelwerkstoffs, der an seiner Oberfläche eine thermo-chemisch stabile Trennschicht 33 aufweist, die eine Bildungsenergie von höchsten 950kJ/mol bei 1.000°C benötigt, wird dieser Prozess verhindert. Flüssiges Aluminium ist nicht in der Lage, Metalloxide mit Bildungsenthalpiekurven, die im Ellingham-Richardson-Diagramm oberhalb der Kurve für Aluminiumoxid liegen, aufzulösen. Eine solche thermo-chemisch stabile Trennschichte 33 enthält beispielsweise Aluminiumoxid, Boroxid oder Bornitrid.

Die Erfindung ist nicht auf Tragmittel 30 in Form von Rollen in einem Rollenherdofen 10 beschränkt. Im Gegenteil sind auch weitere Fördermittel 30, wie beispielsweise Hubbalken und Warenträger, von der Erfindung umfasst. Weiterhin sind alle Flächen, die zu behandelnde Werkstücke tragen, von der Erfindung umfasst. So ist beispielsweise die Oberfläche des Bodens einer Kammer eines Kammerofens ebenso als Tragmittel im Sinne der Erfindung zu verstehen. Ebenso ist die Erfindung nicht auf die Verwendung von metallischen Werkstoffen für das Tragmittel 30 beschränkt. Es können auch andere Werkstoffe, wie beispielsweise keramische Werkstoffe eingesetzt werden, wenn sie eine Oberfläche (34) aus einer thermo-chemisch stabilen Trennschicht 33 aufweisen.

### Bezugszeichenliste:

- 10: Ofen, Rollenherdofen
- 11: Heizmittel
- 12: Abdeckung Eingangsöffnung, Trennschieber
- 13: Abdeckung Ausgangsöffnung, Trennschieber
- 20, 20', 20": Werkstück
- 30: Tragmittel, Fördermittel, Rolle
- 31: Kern
- 33: Schicht
- 34: Oberfläche

## Patentansprüche

1. Tragmittel (30) für einen Ofen für die Wärmebehandlung AlSi-beschichteter Metallteile,
**dadurch gekennzeichnet,**
**dass** das Tragmittel (30) eine Oberfläche (34) aus einer thermo-chemisch stabilen Trennschicht (33) aufweist, die eine Bildungsenergie von höchsten 950kJ/mol bei 1.000°C benötigt.

2. Tragmittel (30) nach Anspruch 1,
**dadurch gekennzeichnet,**
**dass** die thermo-chemisch stabile Trennschicht (33) der Oberfläche (34) einen erhöhten Anteil an Aluminiumoxid aufweist.

3. Tragmittel (30) nach Anspruch 2,
**dadurch gekennzeichnet,**
**dass** die Oberfläche (34) des Tragmittels (30) eine Aluminiumoxidschicht (33) mit ca. 6 Massen% Aluminium aufweist.

4. Tragmittel (30) nach Anspruch 1,
**dadurch gekennzeichnet,**
**dass** die thermo-chemisch stabile Trennschicht (33) der Oberfläche (34) einen erhöhten Anteil an Boroxid aufweist.

5. Tragmittel (30) nach Anspruch 1,
**dadurch gekennzeichnet,**
**dass** die thermo-chemisch stabile Trennschicht (33) der Oberfläche (34) einen erhöhten Anteil an Bornitrid aufweist.

6. Tragmittel (30) nach einem der vorhergehenden Ansprüche,
**dadurch gekennzeichnet,**
**dass** die thermo-chemisch stabile Trennschicht (33) der Oberfläche (34) des Tragmittels (30) dicht geschlossen ist.

7. Tragmittel (30) nach einem der vorherigen Ansprüche,
**dadurch gekennzeichnet,**
**dass** die thermo-chemisch stabile Trennschicht (33) auf der Oberfläche (34) des Tragmittels (30) eine Schichtdicke von ca. 5 µm aufweist.

8. Tragmittel (30) nach einem der vorherigen Ansprüche,
**dadurch gekennzeichnet,**
**dass** das Tragmittel (30) einen Kern (31) aus einem stabilen metallischen Grundwerkstoff aufweist.

9. Tragmittel (30) nach Anspruch 8,
**dadurch gekennzeichnet,**
**dass** der stabile metallisch Grundwerkstoff aus einer Metalllegierung mit einem erhöhten Aluminiumanteil besteht.

10. Tragmittel (30) nach einem der Ansprüche 1 bis 7,
**dadurch gekennzeichnet,**
**dass** das Tragmittel (30) einen Kern (31) aus einem keramischen Grundwerkstoff aufweist.

11. Tragmittel (30) nach einem der vorherigen Ansprüche,
**dadurch gekennzeichnet,**
**dass** das Tragmittel (30) eine Rolle eines Rollenherdofens (10) ist.

12. Tragmittel (30) nach einem der Ansprüche 1 - 10,
**dadurch gekennzeichnet,**
**dass** das Tragmittel (30) ein Warenträger ist.

13. Tragmittel (30) nach einem der Ansprüche 1 - 10,
**dadurch gekennzeichnet,**
**dass** das Tragmittel (30) ein Hubbalken ist.

14. Tragmittel (30) nach einem der Ansprüche 1 - 10,
**dadurch gekennzeichnet,**
**dass** das Tragmittel(30) die Oberfläche des Bodens eines Kammerofens ist.

15. Ofen (10),
**dadurch gekennzeichnet,**
**dass** der Ofen (10) ein Tragmittel (30) nach einem der Ansprüche 1 - 14 aufweist.
